(19) Europäisches Patentamt / European Patent Office / Office européen des brevets

(11) **EP 1 995 667 A1**

(12) **EUROPEAN PATENT APPLICATION**

(43) Date of publication:
**26.11.2008 Bulletin 2008/48**

(51) Int Cl.:
***G06F 17/30*** (2006.01)

(21) Application number: **07010516.8**

(22) Date of filing: **25.05.2007**

<table>
<tr><td>(84) Designated Contracting States:<br><b>AT BE BG CH CY CZ DE DK EE ES FI FR GB GR HU IE IS IT LI LT LU LV MC MT NL PL PT RO SE SI SK TR</b><br>Designated Extension States:<br><b>AL BA HR MK RS</b><br><br>(71) Applicant: <b>SOFTWARE AG<br>64297 Darmstadt (DE)</b></td><td>(72) Inventor: <b>Gesmann, Michael, Dr.<br>64297 Darmstadt (DE)</b><br><br>(74) Representative: <b>Heselberger, Johannes<br>Patent- und Rechtsanwälte<br>Bardehle - Pagenberg - Dost<br>Altenburg - Geissler<br>Galileiplatz 1<br>81679 München (DE)</b></td></tr>
</table>

(54) **Method and system for processing a non-XML document for storage in a XML database**

(57)    A method for processing a non-XML document (10) for storage in a XML database is disclosed. The method comprises the steps of
- generating a shadow XML document (20) for the non-XML document (10) in accordance with a predetermined XML schema, the shadow XML document (20) comprising metadata extracted from the non-XML document (10),
- storing the shadow XML document (20) and the non-XML document (10) in the XML database;
wherein the XML schema comprises a wrapping element adapted to wrap XML content of an at least partly undefined XML structure.

**Fig. 1**

EP 1 995 667 A1

**Description**

**1. Technical field**

The present invention relates to a method and a database system for processing a non-XML document for storage in a XML database

**2. The prior art**

XML databases are one of the most important technical tools of modem information societies. The high degree of flexibility of such a database allows to store and to retrieve data in a very efficient manner. Generally, XML databases are designed for XML documents. However, in the prior art it is also known to extend a XML database so that it is capable to store other types of documents. For example the XML database Tamino of applicant is adapted to store non-XML documents such as text files, MS Office files, PDF files, images and audio files, etc.. To enable the retrieval of such non-XML documents from the database, it is known to analyze a non-XML document to be stored and to extract some metadata for generating a so-called XML shadow document corresponding to the non-XML document. Using XQuery, the shadow XML document can later be searched and the corresponding non-XML document can be retrieved.

The analysis and the extraction of the metadata is typically performed by a piece of software of the database system, wherein this software is specific for a certain type of non-XML document. Alternatively, a more generic analysing and extracting software can be provided for the handling of non-XML documents, which comprises several components, each of which is specifically designed to process a predefined type of non-XML document. Similar methods and systems are known from the US 6,549,922 and the published US patent application US 2005050086.

However, all of the methods and systems of the prior art for processing non-XML documents for storage in a XML database use a predefined format or schema for the generated XML documents. In other words, all types of non-XML documents will always lead to a certain type of shadow XML document. For example the above mentioned Tamino database of applicant uses a fixed XML schema, which is in accordance with the "Dubin Core Metadata Initiative" (http://dublincore.org/) and follows the OpenOffice-formats (http://openoffice.org). As a result, the content of the shadow XML document is sometimes not very useful, if the fixed XML schema does not allow to store metadata on the shadow XML document with meaningful information. Searches for the non-XML documents based on the shadow XML documents known in the prior art are therefore ineffective and slow.

The above outlined approach for processing non-XML documents furthermore leads to problems, if new types of non-XML documents are to be processed for storing and/or if software components of different providers are to be used for handling different types of non-XML documents. This applies in particular, if the new type of document is not a standard office document but for example an image, wherein the metadata to be extracted (e.g. color distribution, resolution, size or any result of an image processing software) is very different from the metadata for a standard office document.

The present invention is therefore in one aspect based on the technical problem to provide a more flexible approach for generating shadow XML documents, which overcomes the at least some of the above explained disadvantages of the prior art.

**3. Summary of the invention**

In one aspect of the present invention, this problem is solved by a method for processing a non-XML document for storage in a XML database comprising the steps of

- generating a shadow XML document for the non-XML document in accordance with a predetermined XML schema, the shadow XML document comprising metadata extracted from the non-XML document,

- storing the shadow XML document and the non-XML document in the XML database;

wherein the XML schema comprises a wrapping element adapted to wrap XML content of an at least partly undefined XML structure.

Accordingly, the method of the present invention stores two separate documents in the XML database, the non-XML document itself and the corresponding shadow document. The structure of the shadow XML document, as defined in the XML schema, is flexible and may vary. This is, since there is no complete definition of the structure of the XML content wrapped by the wrapping element of the XML schema of the invention. On the contrary, any well-formed XML content can be arranged inside the wrapping element. As a result, the described method provides more flexibility for the components generating the XML shadow document, since they no longer have to strictly adhere to an inflexible, fixed XML schema.

Even though the wrapping element can wrap any kind of well-formed XML content regardless of its structure and content, the XML content of the wrapping element is adapted to be searched using an XQuery with a wildcard.

According to another aspect of the present invention, the method further comprises the step of creating an index on the shadow XML document, wherein in one example information for the index is defined in the XML schema. Accordingly, the flexibility of the structure of the XML content of the wrapping element is combined with some definitions, which are adapted for providing an index for later search and retrieval of the shadow XML documents and their non-XML counterparts. In one embodiment, the shadow XML document comprises a unique identifier identifying the corresponding non-XML document.

According to another aspect, the present invention concerns a XML database system with an analyzer adapted to analyze a non-XML document, at least one extractor adapted to extract metadata from the non-XML document and to generate a shadow XML document for the non-XML document in accordance with a predefined XML schema, wherein the shadow XML document comprises the metadata. The XML database system further comprises a wrapper adapted to wrap the extracted metadata in the shadow XML document, wherein the structure of the wrapped metadata is at least partly undefined in the XML schema.

The analyzer, the extractor and the wrapper are in one embodiment provided as an extension of a database server, which therefore provides all the functionality for the structured storage of non-XML documents and their respective metadata.

Additionally, the XML database system may further comprise an index based on content of the shadow XML document. This index can be based on information in the wrapped metadata of the shadow XML document.

Further modifications of the described methods and XML database systems are defined in further dependent claims.

### 5. Short description of the drawings

Fig. 1:    An exemplary embodiment of the XML database system of the present invention;

Fig. 2:    An example of a flexible XML schema in accordance with an embodiment of the present invention;

Fig. 3:    A section of a shadow XML document in accordance with the XML schema of Fig. 1; and

Fig. 4:    A further example of a flexible XML schema adapted for indexing.

### 6. Detailed description of preferred embodiments

In the following, exemplary embodiments of the XML database system and the method of the present invention are described. It will be understood that functionality described below can be implemented in a number of alternative ways, for example on a single database server, a distributed arrangement of a plurality of database servers, with an integral storage or an external storage, etc.. None of these implementation details is essential for the present invention.

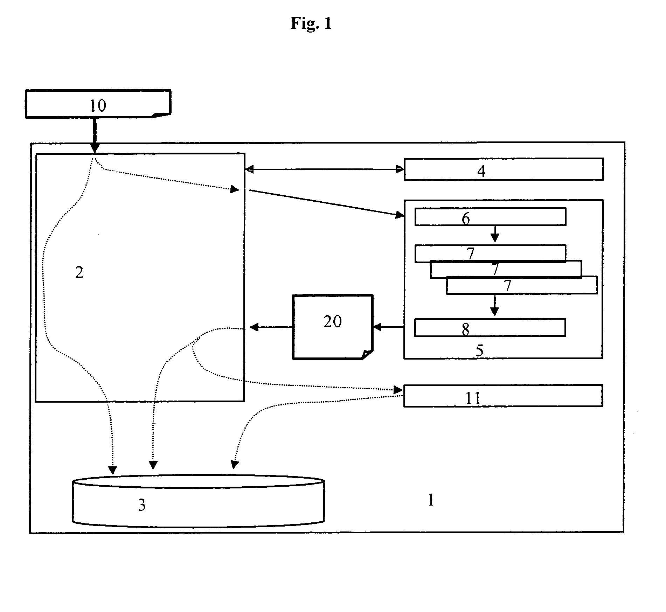

Fig. 1 presents an overview of an exemplary XML database system 1. The system 1 generally serves to store and to retrieve XML documents (not shown in Fig. 1). However, the XML database system of Fig. 1 is also capable to process non-XML documents such as the exemplary media file 10 shown in Fig. 1. The media file 10 can be any type of non-XML document, e.g. a video file, an audio file, a combination thereof, an image, a MS Office document, an arbitrary set of binary data such as measurement results, etc..

For processing the media file 10, the XML database system 1 comprises in one embodiment a document processor 2. The document processor 2 drives the process for storing a document. As illustrated by the dotted arrow on the left side of Fig. 1, the media file 10 is stored in the storage means 3, for example a RAID array (not shown) or a similar storage device of the XML data base system 1. Any volatile or non-volatile storage means known to the person skilled in the art can be used as the storage means 3 of the XML database system 1.

In addition, the media file 10 is forwarded to a schema processor 4. The operation of the schema processor 4 and the further elements of the XML database system 1 which are shown on the right side of Fig. 1 serves to process the media file 10 so that it can be searched and retrieved similar to other XML documents stored in the database. In the exemplary embodiment of Fig. 1, the schema processor 4 provides information about a ServerExtension 5 to be called, which comprises the further processing elements 6 - 8. However, it is to be noted that the components 6 - 8 as well as the schema processor 4 could also be integrated into the standard processing engine of a database sever (not shown in Fig. 1) of the overall XML database system and do not have to be provided as separate entities. The provision of a ServerExtension 5 described below facilitates the upgrading of an existing XML database system with the functionality for the handling of non-XML files, such as the media file 10.

In a first step, an analyzer 6 analyzes the media file 10 and determines which extractors 7 are to be called. Each extractor 7 processes the media file 10 and generates content for a shadow XML document 20. Depending on the type of media file 10, different extractors 7 can be used. For example, there might be an extractor 7 performing image processing on an image and outputting metadata about the image such as its resolution, colour distribution or any other type of image related information. Another extractor 7 may be adapted to process video files and a further extractor 7 may be provided for extracting metadata about an audio file, such as its length, the sampling frequency etc.. Whereas in the described embodiment there are distinct extractors 7 for each type of media file 10, there could also be one or more integrated extractors 7 being able to extract metadata from more than one type of file.

Finally, a wrapper 8 creates a common doctype element around the generated XML content. It is to be noted that this content, which was generated by one or more extractors 7, can be any well-formed XML content, regardless of its specific structure. Therefore, the described embodiment of the XML database system can be quickly adapted to new media files by adding or modifying an extractor 7 so that the new type of files can be processed.

Whereas the schema processor 4, the analyzer 6, the extractors 7 and the wrapper 8 have been described and shown in Fig. 1 as separate components it is also possible to integrate one or more of theses components into a single processing component of the described XML database system 1.

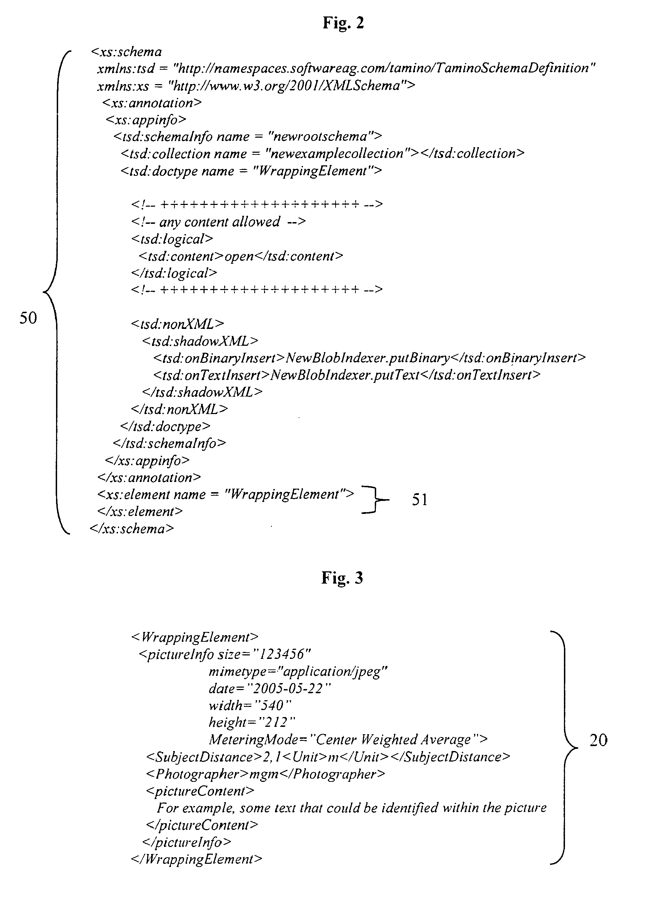

Although the resulting XML shadow document 20 is fully flexible with respect to the structure and the content of the XML metadata generated by the extractors 7 from the media file 10, it is nevertheless in accordance with a predefined XML schema. An example of such a flexible XML schema 50 for shadow XML documents of the XML database system is shown in Fig. 2. As can be seen, the XML schema 50 comprises among others a wrapping element 51, which contains in the corresponding XML shadow document the XML content generated by one or more of the extractors

Looking more in detail, the XML schema 50 of Fig. 2 refers to a ServerExtension "NewBlobIndexer", which is one possible embodiment of the ServerExtension 5 shown in Fig. 1. The ServerExtension NewBlobIndexer calls for a given non-XML document a suitable extractor 7. The extractor 7 then generates in accordance with its specific implementation the content for the shadow XML document 20. To this end, the ServerExtension NewBlobIndexer takes the XML content as provided by the one or more extractors 7 and generates a root element having in this embodiment the name "wrapping element". The structure of the XML content of the wrapping element is not defined so that any arbitrarily structured XML content can be comprised. In this embodiment, there is no unified structure of the resulting XML shadow documents generated for media files of different types.

In addition to the elements shown in Fig. 2, the XML schema 50 for the shadow XML documents 20 may comprise further elements, for example to meet the requirements of the above mentioned "Dubin Core Metadata Initiative" and/or the OpenOffice-formats.

An exemplary section of a XML shadow element 20 generated as explained above is shown in Fig. 3. As can be seen, it comprises a "wrapping element", which contains XML content with information about a photo, such as its width and height, the photographed subject, the photographer etc.. As mentioned before, the structure of the XML metadata in the wrapping element of the shadow XML element 20 is arbitrary. For example, the various photo related information may be differently arranged within the wrapping element or there might be other information about the photo, for example the exposure time or the selected lens used for taking the picture.

Regardless of the specific structure of the XML content of the wrapping element, it is still possible to execute queries on the shadow XML documents. One option of such a query is the use of wildcards, which do not require information about a specific structure of the XML content of the shadow XML document. For example a query for

$$/*[//author="X"]$$

will yield all shadow XML documents, which somewhere have an element "author" with the value "X". In another example the query

$$/WrappingElement[//Creator="X" \text{ or } //Photographer="X"]$$

yields all documents having a creator or photographer "X" somewhere in the wrapping element. As a result, in spite of the increased flexibility for the generation of the shadow XML documents 20, it is still possible to perform powerful searches and to effectively retrieve the relevant shadow XML documents. Once a desired shadow XML document 20 has been retrieved, the respective non-XML document 10 can also be immediately accessed using for example a unique identifier identifying for each shadow document 20 the corresponding non-XML document 10.

In addition to the generation of the shadow XML documents 20, the XML database system 1 of Fig. 1 may comprise an index processor 11, which creates indexes for shadow XML documents 20. The result of the index processing is in the embodiment of Fig. 1 also stored in the storage means 3 of the overall XML database system 1 (cf. the corresponding dotted arrow in fig. 1). However, this is not essential. The index information can also be stored separately from the media file 10 and the corresponding shadow XML document 20.

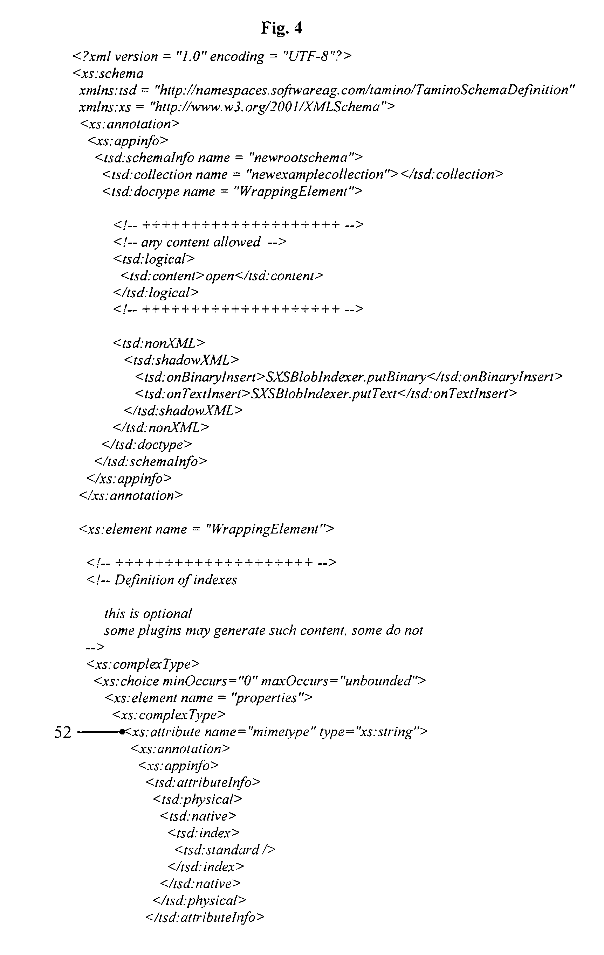

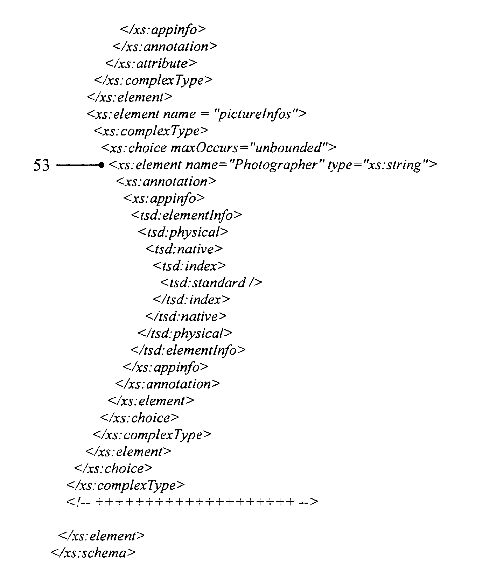

There are various ways how to generate an index over the shadow XML documents 20. In one embodiment, one or more attributes and/or elements for the index are defined in the XML schema for the shadow XML documents. An example for such an extended XML schema is shown in Fig. 4. As can be seen, an attribute 52 and an element 53 are defined, which allow to base an index over the shadow XML documents thereon. The attribute "mimetype" is defined as a string and indicates the type of the media file 10, for example a .jpeg file (cf. also the shadow XML document of Fig. 3). The element "Photographer" is also defined as a string and can be used to create an index for photos according to the photographer having taken the respective photo. Using the attribute and the element defined in the XML schema of Fig. 4, a query can be defined to obtain all .jpeg files of a certain photographer.

It is to be noted that the definition of the information necessary for the index does not imply a certain XML structure for the content of the wrapping element so that the above explained flexibility is preserved. On the contrary, the attribute and the element for the index in the example of Fig. 4 can be defined regardless of the specific structure of the XML content of the wrapping element. In other words querying the index based on the defined attribute and the defined element of the XML schema will retrieve a XML shadow document, whenever there is agreement of the search values of the attribute and the element with the values in a shadow XML document.

**Claims**

1. Method for processing a non-XML document (10) for storage in a XML database comprising the steps of:

    a. generating a shadow XML document (20) for the non-XML document (10) in accordance with a predetermined XML schema (50), the shadow XML document (20) comprising metadata extracted from the non-XML document (10);
    b. storing the shadow XML document (20) and the non-XML document (10) in the XML database;
    c. wherein the XML schema (50) comprises a wrapping element (51) adapted to wrap XML content of an at least partly undefined XML structure.

2. Method according to claim 1, wherein the wrapping element (51) is defined as a root element of the XML schema (50).

3. Method according to claim 1 or 2, wherein the wrapping element (51) is defined using a XML doctype definition.

4. Method according to any of the preceding claims, wherein the XML content of the wrapping element (50) is adapted to be searched using an XQuery with a wildcard.

5. Method according to any of the preceding claims further comprising the step of creating an index on the shadow XML document (20).

6. Method according to the preceding claim, wherein information (52, 53) for the index is defined in the XML schema (50).

7. Method according to any of the preceding claims, wherein the non-XML document (10) comprises an image and wherein the metadata are extracted using an image processing software.

8. Method according to any of the preceding claims, wherein the non-XML document (10) comprises a text, in particular a .pdf document or a Microsoft Office document.

9. Method according to any of the preceding claims, wherein the non-XML document (10) comprises an audio and/or a video file.

10. Method according to any of the preceding claims, wherein the non-XML document is a compressed file.

11. Method according to any of the preceding claims, wherein the shadow XML document (20) comprises a unique identifier identifying the corresponding non-XML document (10).

12. Computer program comprising instructions for performing a method of any of the preceding claims.

13. A XML database system (1) comprising:

a. an analyzer (6) adapted to analyze a non-XML document (10);
b. at least one extractor (7) adapted to extract metadata from the non-XML document (10) and to generate a shadow XML document (20) for the non-XML document (10) in accordance with a predefined XML schema (50), the shadow XML document (20) comprising the metadata; and
c. a wrapper (8) adapted to wrap the extracted metadata in the shadow XML document (20), wherein the structure of the wrapped metadata is at least partly undefined in the XML schema (50).

14. The XML database system (1) of claim 13 further comprising a storage unit (3) adapted to store both the non-XML document (10) and the shadow XML document (20).

15. The XML database system (1) of claim 13 or 14, wherein the analyzer (6), the extractor (7) and the wrapper (8) are provided as an extension (5) of a database server.

16. The XML database system (1) of any of the preceding claims 13 - 15, further comprising an index based on content of the shadow XML document (20).

17. The XML database system (1) of the preceding claim 16, wherein the index is based on information (52, 53) in the wrapped metadata of the shadow XML document (20).

18. The XML database system (1) of any of the preceding claims 13 - 17, wherein the shadow XML document (20) comprises a unique identifier identifying the corresponding non-XML document (10).

**Fig. 1**

**Fig. 2**

```
<xs:schema
  xmlns:tsd = "http://namespaces.softwareag.com/tamino/TaminoSchemaDefinition"
  xmlns:xs = "http://www.w3.org/2001/XMLSchema">
 <xs:annotation>
  <xs:appinfo>
   <tsd:schemaInfo name = "newrootschema">
    <tsd:collection name = "newexamplecollection"></tsd:collection>
    <tsd:doctype name = "WrappingElement">

      <!-- ++++++++++++++++++++++ -->
      <!-- any content allowed -->
      <tsd:logical>
       <tsd:content>open</tsd:content>
      </tsd:logical>
      <!-- ++++++++++++++++++++++ -->

      <tsd:nonXML>
       <tsd:shadowXML>
        <tsd:onBinaryInsert>NewBlobIndexer.putBinary</tsd:onBinaryInsert>
        <tsd:onTextInsert>NewBlobIndexer.putText</tsd:onTextInsert>
       </tsd:shadowXML>
      </tsd:nonXML>
    </tsd:doctype>
   </tsd:schemaInfo>
  </xs:appinfo>
 </xs:annotation>
 <xs:element name = "WrappingElement">
 </xs:element>
</xs:schema>
```

50

51

**Fig. 3**

```
<WrappingElement>
 <pictureInfo size="123456"
          mimetype="application/jpeg"
          date="2005-05-22"
          width="540"
          height="212"
          MeteringMode="Center Weighted Average">
  <SubjectDistance>2,1<Unit>m</Unit></SubjectDistance>
  <Photographer>mgm</Photographer>
  <pictureContent>
    For example, some text that could be identified within the picture
  </pictureContent>
 </pictureInfo>
</WrappingElement>
```

20

## Fig. 4

```
<?xml version = "1.0" encoding = "UTF-8"?>
<xs:schema
  xmlns:tsd = "http://namespaces.softwareag.com/tamino/TaminoSchemaDefinition"
  xmlns:xs = "http://www.w3.org/2001/XMLSchema">
  <xs:annotation>
    <xs:appinfo>
      <tsd:schemaInfo name = "newrootschema">
        <tsd:collection name = "newexamplecollection"></tsd:collection>
        <tsd:doctype name = "WrappingElement">

          <!-- ++++++++++++++++++++++++ -->
          <!-- any content allowed -->
          <tsd:logical>
            <tsd:content>open</tsd:content>
          </tsd:logical>
          <!-- ++++++++++++++++++++++++ -->

          <tsd:nonXML>
            <tsd:shadowXML>
              <tsd:onBinaryInsert>SXSBlobIndexer.putBinary</tsd:onBinaryInsert>
              <tsd:onTextInsert>SXSBlobIndexer.putText</tsd:onTextInsert>
            </tsd:shadowXML>
          </tsd:nonXML>
        </tsd:doctype>
      </tsd:schemaInfo>
    </xs:appinfo>
  </xs:annotation>


  <xs:element name = "WrappingElement">


  <!-- ++++++++++++++++++++++++ -->
  <!-- Definition of indexes

    this is optional
    some plugins may generate such content, some do not
  -->
  <xs:complexType>
    <xs:choice minOccurs="0" maxOccurs="unbounded">
      <xs:element name = "properties">
        <xs:complexType>
          <xs:attribute name="mimetype" type="xs:string">
            <xs:annotation>
              <xs:appinfo>
                <tsd:attributeInfo>
                  <tsd:physical>
                    <tsd:native>
                      <tsd:index>
                        <tsd:standard />
                      </tsd:index>
                    </tsd:native>
                  </tsd:physical>
                </tsd:attributeInfo>
```

```
        </xs:appinfo>
       </xs:annotation>
      </xs:attribute>
    </xs:complexType>
   </xs:element>
   <xs:element name = "pictureInfos">
    <xs:complexType>
     <xs:choice maxOccurs="unbounded">
53 ●  <xs:element name="Photographer" type="xs:string">
       <xs:annotation>
        <xs:appinfo>
         <tsd:elementInfo>
          <tsd:physical>
           <tsd:native>
            <tsd:index>
             <tsd:standard />
            </tsd:index>
           </tsd:native>
          </tsd:physical>
         </tsd:elementInfo>
        </xs:appinfo>
       </xs:annotation>
      </xs:element>
     </xs:choice>
    </xs:complexType>
   </xs:element>
  </xs:choice>
 </xs:complexType>
 <!-- +++++++++++++++++++++ -->

 </xs:element>
</xs:schema>
```

European Patent Office

# EUROPEAN SEARCH REPORT

Application Number

EP 07 01 0516

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| D,X | US 6 549 922 B1 (SRIVASTAVA ALOK [US] ET AL) 15 April 2003 (2003-04-15)<br>* abstract *<br>* column 4, line 31 - column 8, line 52; figures 1,2 * | 1-18 | INV.<br>G06F17/30 |
| X | US 2005/132276 A1 (PANDITHARADHYA NAGALINGA DURGA [US] ET AL) 16 June 2005 (2005-06-16)<br>* abstract *<br>* paragraph [0036] - paragraph [0046]; figure 1 * | 1-18 | |
| A | ROSE K H ET AL: "Virtual XML: a toolbox and use cases for the XML world view" IBM SYSTEMS JOURNAL, [Online] vol. 45, no. 2, 2006, pages 411-424, XP002456163 ISSN: 0018-8670 Retrieved from the Internet: URL:http://www.research.ibm.com/journal/sj /452/rose.pdf> [retrieved on 2007-10-23]<br>* the whole document * | 1,12,13 | |

TECHNICAL FIELDS SEARCHED (IPC)

G06F

The present search report has been drawn up for all claims

| Place of search | Date of completion of the search | Examiner |
|---|---|---|
| Berlin | 23 October 2007 | Barieux, Marc |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 07 01 0516

This annex lists the patent family members relating to the patent documents cited in the above-mentioned European search report.
The members are as contained in the European Patent Office EDP file on
The European Patent Office is in no way liable for these particulars which are merely given for the purpose of information.

23-10-2007

| Patent document cited in search report | Publication date | Patent family member(s) | Publication date |
|---|---|---|---|
| US 6549922 B1 | 15-04-2003 | NONE | |
| US 2005132276 A1 | 16-06-2005 | NONE | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6549922 B
- US 2005050086 A